# EUROPEAN PATENT SPECIFICATION

(11) **EP 2 865 171 B1**
(45) Date of publication and mention of the grant of the patent: **08.08.2018**
(21) Application number: 13731856.4
(22) Date of filing: 17.06.2013
(51) Int. Cl.: H04M 1/22, H04M 1/725, H04B 1/04, H04W 4/12, H04W 72/04, H04W 88/06

(54) **MOBILE DEVICE OPERATING MODE ALTERATION**
BETRIEBSMODUSÄNDERUNG FÜR EINE MOBILE VORRICHTUNG
MODIFICATION DU MODE DE FONCTIONNEMENT D'UN DISPOSITIF MOBILE

(30) Priority: 24.06.2012 US 201261663601 P
(43) Date of publication of application: 29.04.2015
(73) Proprietor: Proudlion IT, Toronto, Ontario M1P 4S5 (CA)
(72) Inventor: GOOMANSINGH, Kyle, Sanjay, Toronto, Ontario M1P 4S5 (CA); CHATOORGOON, Meera, Sati, Toronto, Ontario M1P 4S5 (CA); GOOMANSINGH, Mona, Deowattee, Winnipeg, Manitoba R3R 3C8 (CA)
(74) Representative: Lucas, Phillip Brian
(86) International application number: PCT/GB2013/051570
(87) International publication number: WO 2014/001759

(56) References cited:
- EP-A2- 1 255 418
- WO-A1-2007/131331
- US-A1- 2004 127 198
- US-A1- 2004 203 768
- US-A1- 2008 318 616
- US-A1- 2009 170 532
- US-A1- 2009 307 616
- US-A1- 2012 040 656
- US-A1- 2012 159 139

## Description

### FIELD OF THE INVENTION

The present invention relates to mobile devices and more particularly to the method of operating mode alterations in mobile devices.

### BACKGROUND

The conventional mobile device includes a display and a keypad for facilitating data entry by the user. Usage of mobile device in certain environmental conditions, such as darkened environment, is obtrusive due the lighting of the screen and other factors. A solution for this problem is required.

The following publications are believed to represent the current state of the art:
U.S. Patent Nos.: US 8,184,423; US 6,813,491; US 6,246,761; US 8,063,869 and US 7,117019.
U.S. Patent Publication Nos.: US20040127198; US20090307616; US20040012556 and US20080045207.

International Patent and Publication Nos. EP1701331 and EP1892612.
US 2009/170532 describes a system for an electronic device where a mode of operation is automatically or selectively applied upon the detection of particular events.
US 2012/159139 discloses a mobile terminal having a controller which upon receiving a switching signal from a user, can switch the mobile terminal from a first mode to a second mode.
US 2004/203768 describes a mobile device, whereupon its profile can be updated automatically or interactively based upon its location.
US 2008/0318616 describes a personal communication device having messaging systems, wherein the device can be manually changed from one mode of operation to a different mode of operation.
US 2012/0040656 discloses an electronic device having a plurality of messaging systems and upon a detection of the location of the electronic device, time on a timer or both, a user interface corresponding to a particular mode is displayed.

### SUMMARY

The present invention seeks to provide a mobile device with improved capabilities. The invention is as set out in the independent claim 1 and 4, preferred forms being set out in the dependent claims 2, 3, 5 and 6. According to a first aspect of the present invention there is provided a mobile device, comprising:
a plurality of messaging systems;
a user interface element having variable intensity lighting;
a frequency alteration module having selectable frequency modes;
an operating mode switch; and
a data processor coupled to said messaging system, said user interface element, said frequency alteration module, and said operating mode switch,
and characterized in that
said data processor includes at least one software application configured, following the operating mode switch actuation, to simultaneously automatically alter visual characteristic, frequency characteristic, and aggregation of messaging systems based on a user predefined alterations set.

There is thus provided in accordance with a preferred embodiment of the invention a mobile device, having a plurality of messaging systems, a user interface element having variable intensity lighting, a frequency alteration module having selectable frequency modes, an operating mode switch and a data processor coupled to the messaging system, the user interface element, the frequency alteration module and the operating mode switch. The data processor includes at least one software application configured, following the operating mode switch actuation, to adjust the lighting intensity of the user interface element, to change the frequency mode of the frequency alteration module and to provide a customized output. The customized output aggregates the mobile device messaging systems.

Preferably, said frequency alteration module is configured to enable selection between a first frequency mode and a second frequency mode.

Advantageously, the first frequency mode provides an audio signal and the second frequency mode provides a vibration signal.

Preferably, said messaging systems are selected from the group consisting of SMS, Email, MMS, chat clients and social networks clients.

Preferably, said customized output is displayed on the at least one of said user interface elements.

According to a second aspect of the invention there is provided method of controlling an operating mode of a mobile device, comprising the steps of:
providing a plurality of messaging systems;
providing a user interface element having variable intensity lighting;
providing a frequency alteration module having selectable frequency modes; providing an operating mode switch; and characterized by
providing a data processor coupled to said messaging systems, said user interface element, said frequency alteration module and said operating mode switch, wherein said data processor includes at least one software application configured, following the operating mode switch actuation, to simultaneously automatically alter visual characteristic, frequency characteristic, and aggregation of messaging systems based on a user-predefined alterations set.

Preferably, said frequency alteration module is configured to enable selection between a first frequency mode and a second frequency mode.

Advantageously, the first frequency mode provides an audio signal and the second frequency mode provides a vibration signal.

Preferably, said messaging systems are selected from the group consisting of SMS, Email, MMS, chat clients and social networks clients.

Preferably, said customized output is displayed on the at least one of said user interface elements.

According to a third aspect of the present invention there is provided an operating mode switch for controlling a mobile device having a plurality of messaging systems according to a first and a second operating modes wherein actuation of the operating mode is configured to automatically switch from the first operating mode to the second operating mode wherein in the second operating mode, visual characteristic change, audio characteristic change and aggregation of the messaging systems occurs simultaneously based on a user predefined alterations set.

Preferably, said audio characteristic change is configured to enable selection between a first audio mode and a second audio mode.

Preferably the first audio mode provides an audio signal and the second audio mode provides a vibration signal.

Advantageously, said visual characteristic change is configured to enable variation of lighting intensity of the mobile device.

Preferably, said messaging systems are selected from the group consisting of SMS, Email, MMS, chat clients and social networks clients

### BRIEF DESCRIPTION OF THE DRAWINGS

The present invention will be understood and appreciated more fully from the following detailed description, taken in conjunction with the drawings in which:
Fig. 1 is a simplified illustration of the main screen appearance in accordance to one embodiment of the present invention.
Fig. 2 is a simplified illustration of the settings screen appearance in accordance to one embodiment of the present invention.
Fig. 3 is a simplified illustration of the customized output screen in the actuated operating mode switch stage in accordance to one embodiment of the present invention.
Fig. 4 is a simplified flow chart depicting, by way of overview, the method of operating mode alteration employed in accordance to one embodiment of the present invention.

### DETAILED DESCRIPTION

The embodiments of the present invention relate to a mobile device 100 and a method of mobile device operating mode alteration. Mobile device is for example, a cellular phone, a tablet, a net book, a smart-phone, an electronic book reader or any other type of mobile or portable electronic device.

The mobile device 100 has at least one user interface element 102, such as a display, a keypad, input buttons or a touch screen. The at least one user interface element 102 preferably has variable intensity lighting, such that the intensity of the backlight provided to the at least one user interface element 102 can be manually adjusted by a user or automatically adjusted using a particular software in order to suit different environmental conditions.

The mobile device 100 also has an audio device and a vibration device. A frequency alteration module having selectable frequency modes is coupled to the mobile device and is configured to selectably change the output mode of the mobile device from audial to tactile mode and vice versa or the combination thereof, whereas audial output is preferably provided by an audio device, such as a speaker and tactile output is preferably provided by a vibration device, such as a vibration speaker. The several selectable frequency modes of the frequency alteration module can be changed either manually by the user or automatically using particular software in order to suit different environmental conditions.

The mobile device 100 additionally has a plurality of messaging systems, such as for example, SMS, MMS, Email, chat and various social network messaging systems. The mobile device 100 includes a data processor that controls the overall operation of the device and is preferably coupled to the above mentioned at least one of the user interface elements 102, to the at least one of the messaging systems and to the frequency alteration module. Different software applications can be integrated to the mobile device data processor in order to control the mobile device operating mode.

It is a particular feature of the present invention that an operating mode switch is coupled to the mobile device data processor and a software is configured to perform a predefined set of alterations to the operating mode of the mobile device, upon actuation of the operating mode switch. The particular pre-defined set of alterations performed upon the actuation of the operating mode switch are described in detail hereinbelow:
The variable lighting intensity of the at least one of the user interface elements 102, which may be the display of the mobile device, is automatically changed. The intensity of the back lighting is preferably decreased to suit dark environmental conditions and the text font lighting may be increased to allow reading.

The selectable frequency mode of the frequency alteration module is preferably adjusted to provide a tactile output and avoid audial output in order to suit certain environmental conditions.

It is a particular feature of the present invention that simultaneously, upon operating mode switch actuation, a customized output 104 is provided. The customized output typically aggregates the messaging systems of the mobile device 100. For example, if SMS messaging application, EMAIL application and a certain chat application are configured on the mobile device 100, all of these applications are aggregated and displayed on a single screen, which constitutes the customized output 104.

It is appreciated that other features provided in the mobile device 100 may be altered by employing the operating mode switch, such as for example, text font style, text font size, mobile device display brightness. These features may be altered simultaneously with the operating mode switch actuation or may be alternatively manually changed by the user immediately after the operating mode switch actuation.

The customized output 104 allows for exposing the user to a limited amount of mobile device functionalities, which are all aggregated into one screen.

It is appreciated that upon first operating mode switch actuation, the user is requested to define the initial settings, generally as follows:
1) The user actuates the operating mode switch, for example by mechanically pushing a button or actuation by means of a touch screen.
2) Main screen of the customized output is presented, having an option to choose "Settings".
3) The user chooses the "Settings".
4) The user adjusts at least one of the features of the at least one of user interface elements, such as for example, back illumination, text font style, text font size or mobile device display brightness and presses "Apply" option.

Following the above mentioned initial setting process, the customized output 104 will be provided upon actuation of the operating mode switch in such a manner that the initial settings as noted above are automatically applied.

It is appreciated that the actuation of the operating mode switch as well as termination on and off may be performed manually by the user and may be alternatively performed automatically by means of a software.

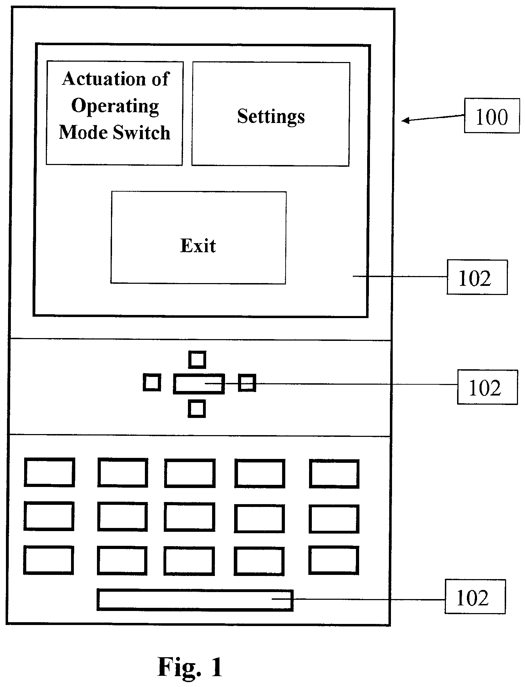

The main screen upon actuation of the operating mode switch preferably has several options as generally described in the simplified main screen illustration of Fig.1.

It is seen in Fig. 1 that the user has an option to actuate the operating mode switch, to enter the settings or exit.

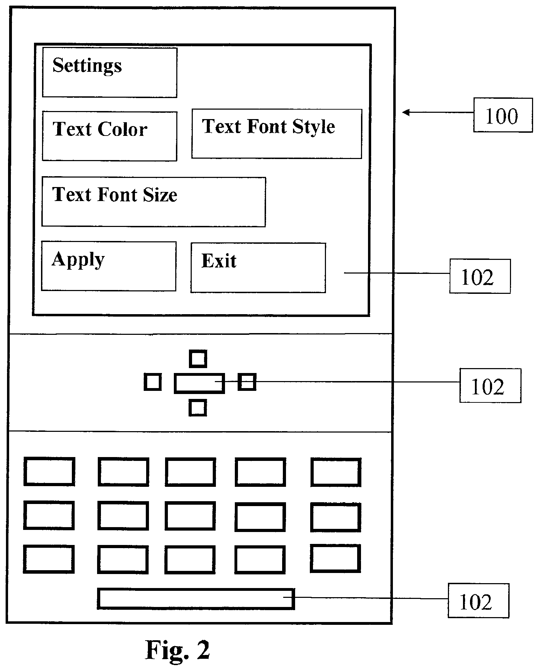

The settings screen that appears upon actuation of the operating mode switch preferably has several options as generally described in the simplified settings screen illustration of Fig.2.

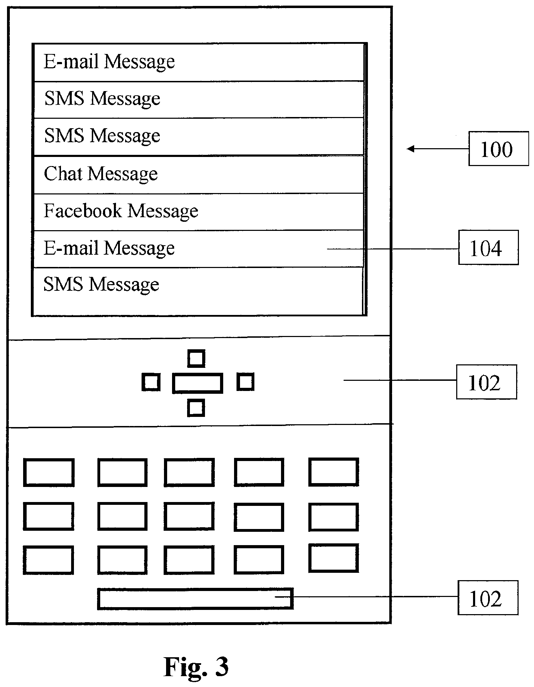

It is seen in Fig. 2 that the user has several options, for example, to change text color, preferably to white or grey. There is an option of changing the text font style and the text font size. Additionally, there is an option to apply the settings or exit. The customized output screen 104 in the actuated operating mode switch stage preferably has several options as generally described in the simplified customized output screen illustration of Fig. 3.

It is seen in Fig. 3 that upon actuation of the operating mode switch, the light intensity of the at least one of the user interface elements is decreased, the brightness of the display is adjusted as per the applied settings and an aggregated list from the messaging systems of the mobile device is displayed on the customized output screen 104.

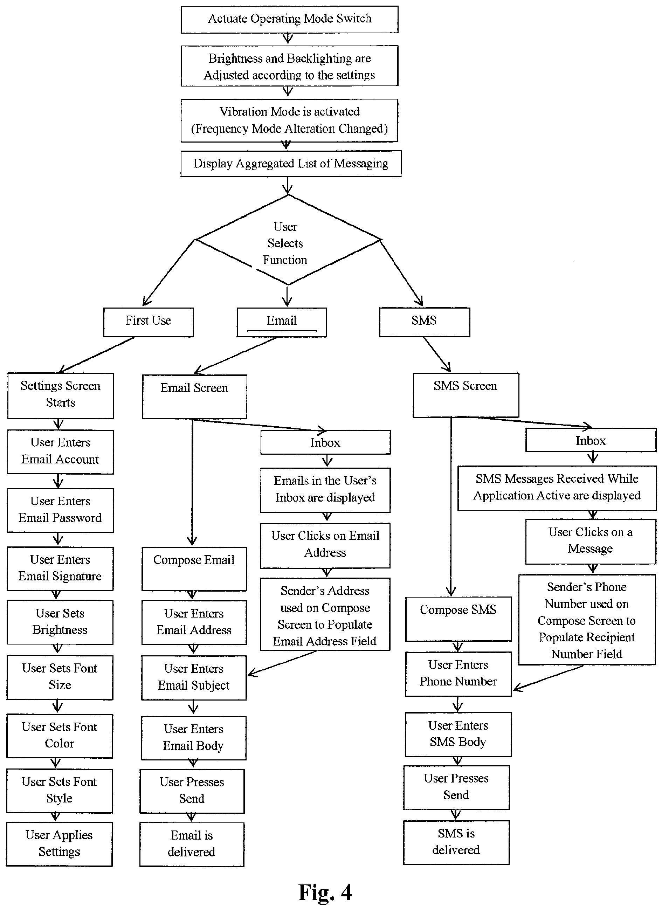

Reference is now made to Fig. 4, which is a simplified flow chart illustration of the mobile device operating mode alteration method. It is seen in Fig. 4 that the user can choose any particular message from the aggregated list of messages and compose a reply.

It is a particular feature of the present invention that a window for composing a reply is implemented in such a manner that the incoming message is not quoted, rather the window is blank and ready for text entry.

It will be appreciated by persons skilled in the art that the present invention is not limited by what has been particularly shown and described hereinabove. Rather the scope of the present invention includes both combinations and sub combinations of various features described hereinabove as well as variations and modifications thereof which are not in the prior art.

## Claims

1. A mobile device, comprising:
a plurality of messaging systems;
a user interface element (102) comprising a screen having variable intensity lighting;
a frequency alteration module having selectable frequency modes, wherein the frequency alteration module is configured to enable a selection between an audio signal and a vibrational signal as a mobile device output;
an operating mode switch, to actuate a predefined set of alterations to the operating mode of the mobile device;
and a data processor coupled to said messaging systems, said user interface element (102), said frequency alteration module and said operating mode switch, **characterized in that**, said data processor includes at least one software application configured, following actuation of said operating mode switch, to simultaneously:
i selectively adjust the lighting intensity of said user interface element, so as to adjust the backlight intensity of the user interface element (102), to a predefined initial setting;
ii selectively adjust the text font style, to a predefined initial setting;
iii selectively change the frequency mode of said frequency alteration module;
iv to provide a customized output, wherein said customized output aggregates said plurality of messaging systems and is displayed on said user interface element;
and
v wherein upon selection of an email messaging system or a SMS messaging system from the display of aggregation of plurality of messaging systems on the interface element (102), a window for composing a reply to an email or SMS is implemented such that the window is blank and ready for text entry.

2. A mobile device according to claim 1, wherein said messaging system is selected from the group consisting of SMS, Email, MMS, chat clients and social networks clients.

3. A mobile device as claimed in any preceding claim, wherein the operating switch actuation simultaneously adjusts at least one of, text font size and mobile display brightness.

4. A method of controlling an operating mode of a mobile device, comprising the steps of:
providing a plurality of messaging systems;
providing a user interface element (102) comprising a screen having variable intensity lighting;
providing a frequency alteration module having selectable frequency modes, wherein
the frequency alteration module is configured to enable a selection between an audio signal and a vibrational signal as a mobile device output;
providing an operating mode switch, to actuate a predefined set of alterations to the operating mode of the mobile device;
and providing a data processor coupled to said messaging systems, said user interface element, said frequency alteration module and said operating mode switch,
**characterized in that** said data processor includes at least one software application configured, following an actuation of said operating mode switch, to simultaneously:
i selectively adjust the lighting intensity of said user interface element, so as to adjust the backlight intensity of the user interface element (102), to a predefined initial setting;
ii selectively adjust the text font style, to a predefined initial setting; iii selectively change the frequency mode of said frequency alteration module;
and
iv to provide a customized output, wherein said customized output aggregates said plurality of messaging systems and is displayed on said user interface element;
and
v wherein upon selection of an email messaging system or a SMS messaging system from the display of aggregation of plurality of messaging systems on the interface element (102), a window for composing a reply to an email or SMS is implemented such that the window is blank and ready for text entry.

5. A method according to claim 4, wherein said messaging system is selected from the group consisting of SMS, Email, MMS, chat clients and social networks clients.

6. A method according to claim 5, wherein said messaging system includes Email and SMS, selecting one of said Email and SMS allows the user to read said Email or SMS and on opting to reply thereto said user is presented with a blank ready for text entry.

## Patentansprüche

1. Mobilgerät, umfassend:
eine Vielzahl von Nachrichtensystemen;
ein Benutzerschnittstellenelement (102), umfassend einen Bildschirm und
das eine Beleuchtung mit variabler Intensität aufweist;
ein Frequenzänderungsmodul, das auswählbare Frequenzmoden aufweist,
wobei das Frequenzänderungsmodul konfiguriert ist, um als eine Ausgabe des Mobilgeräts eine Auswahl zwischen einem Audiosignal und einem Vibrationssignal zu ermöglichen;
einen Betriebsmodusschalter, um einen vordefinierten Satz von Änderungen an dem Betriebsmodus des Mobilgeräts zu betätigen;
und einen Datenprozessor, der mit den Nachrichtensystemen, dem Benutzerschnittstellenelement (102), dem Frequenzänderungsmodul und
dem Betriebsmodusschalter verbunden ist, **dadurch gekennzeichnet, dass** der Datenprozessor mindestens eine Softwareanwendung umfasst, die konfiguriert ist, um im Anschluss an eine Betätigung des Betriebsmodusschalters gleichzeitig :
i. selektiv die Beleuchtungsintensität von dem Benutzerschnittstellenelement auf eine vordefinierte Anfangseinstellung einzustellen, um so die Hintergrundbeleuchtungsintensität von dem Benutzerschnittstellenelement (102) einzustellen;
ii. selektiv den Schriftarttyp auf eine vordefinierte Anfangseinstellung einzustellen;
iii. selektiv den Frequenzmodus von dem Freauenzänderugsmodul zu ändern;
iv. eine benutzerangepasste Ausgabe bereitzustellen, wobei die benutzerangepasste Ausgabe eine Vielzahl von Nachrichtensystemen aggregiert und auf dem Benutzerschnittstellenelement anzeigt; und
v. wobei nach einer Auswahl von einem E-Mail-Nachrichtensystem oder einem SMS-Nachrichtensystem aus der Anzeige der Aggregation von der Vielzahl von Nachrichtensystemen auf dem Schnittstellenelement (102) ein Fenster implementiert wird, um eine Antwort auf eine E-Mail oder SMS zu verfassen, und zwar so, dass das Fenster frei und für die Texteintragung bereit ist.

2. Mobilgerät nach Anspruch 1, wobei das Nachrichtensystem aus der Gruppe ausgewählt ist, bestehend aus SMS, E-Mail, MMS, Chat-Clients und Clients für soziale Netzwerke.

3. Mobilgerät nach einem der vorhergehenden Ansprüche, wobei die Betriebsschalterbetätigung gleichzeitig mindestens eines aus Schriftartgroße und Mobilanzeigenhelligkeit einstellt.

4. Verfahren zum Steuern von einem Betriebsmodus von einem Mobilgerät, umfassend die folgenden Schritte:
Bereitstellen von einer Vielzahl von Nachrichtensystemen;
Bereitstellen von einem Benutzerschnittstellenelement (102), umfassend einen Bildschirm und das eine Beleuchtung mit variabler Intensität aufweist;
Bereitstellen von einem Frequenzänderungsmodul, das auswählbare Frequenzmoden aufweist, wobei das Frequenzänderungsmodul konfiguriert ist, um als eine Ausgabe des Mobiigeräts eine Auswahl zwischen einem Audiosignal und einem Vibrationssignal zu ermöglichen;
Bereitstellen von einem Betriebsmodusschalter, um einen vordefinierten Satz von Änderungen an dem Betriebsmodus des Mobilgeräts zu betätigen;
und Bereitstellen von einen Datenprozessor, der mit den Nachrichtensystemen, dem Benutzerschnittstellenelement, dem Frequenzänderungsmodul und dem Betriebsmodusschalter verbunden ist, **dadurch gekennzeichnet, dass** der Datenprozessor mindestens eine Softwareanwendung umfasst, die konfiguriert ist, um im Anschluss an eine Betätigung des Betriebsmodusschalters gleichzeitig:
i. selektiv die Beleuchtungsintensität von dem Benutzerschnittstellenelement auf eine vordefinierte Anfangseinstellung einzustellen, um so die Hintergrundbeleuchtungsintensität von dem Benutzerschnittstellenelement (102) einzustellen;
ii. selektiv den Schriftarttyp auf eine vordefinierte Anfangseinstellung einzustellen;
iii. selektiv den Frequenzmodus von dem Frequenzänderungsmodul zu ändern; und
iv. eine benutzerangepasste Ausgabe bereitzustellen, wobei die benutzerangepasste Ausgabe eine Vielzahl von Nachrichtensystemen aggregiert und auf dem Benutzerschnittstellenelement anzeigt; und
v. wobei nach einer Auswahl von einem E-Mail-Nachrichtensystem oder einem SMS-Nachrichtensystem aus der Anzeige der Aggregation von der Vielzahl von Nachrichtensystemen auf dem Schnittstellenelement (102) ein Fenster implementiert wird, um eine Antwort auf eine E-Mail oder SMS zu verfassen, und zwar so, dass das Fenster frei und für die Texteintragung bereit ist.

5. Verfahren nach Anspruch 4, wobei das Nachrichtensystem aus der Gruppe ausgewählt ist, bestehend aus SMS, E-Mail, MMS, Chat-Clients und Clients für soziale Netzwerke.

6. Verfahren nach Anspruch 5, wobei das Nachrichtensystem E-Mail und SMS umfasst, wobei das Auswählen von einem aus E-Mail und SMS dem Benutzer gestattet, die E-Mail oder SMS zu lesen und sich dafür zu entscheiden darauf zu antworten, wobei dem Benutzer eine Freifläche präsentiert wird, die für die Texteintragung bereit ist.

## Revendications

1. Dispositif mobile, comprenant :
une pluralité de systèmes de messagerie ;
un élément d'interface utilisateur (102) comprenant un écran ayant un éclairage d'intensité variable ;
un module de modification de fréquence ayant des modes de fréquence sélectionnables, dans lequel le module de modification de fréquence est configuré pour permettre une sélection entre un signal audio et un signal vibratoire en tant que sortie de dispositif mobile ;
un commutateur de mode de fonctionnement, pour actionner un ensemble prédéfini de modifications pour le mode de fonctionnement du dispositif mobile ;
et un processeur de données couplé auxdits systèmes de messagerie, audit élément d'interface utilisateur (102), audit module de modification de fréquence et audit commutateur de mode de fonctionnement, **caractérisé en ce que**, ledit processeur de données comporte au moins une application logicielle configurée, suite à l'actionnement dudit commutateur de mode de fonctionnement, pour simultanément :
i. régler sélectivement l'intensité d'éclairage dudit élément d'interface utilisateur, de façon à régler l'intensité de rétroéclairage de l'élément d'interface utilisateur (102), à un paramétrage initial prédéfini ;
ii. régler sélectivement le style de police de texte, à un paramétrage initial prédéfini ;
iii. changer sélectivement le mode de fréquence dudit module de modification de fréquence ;
iv. fournir une sortie personnalisée, dans lequel ladite sortie personnalisée agrège ladite pluralité de systèmes de messagerie et est affichée sur ledit élément d'interface utilisateur ; et
v. dans lequel, lors de la sélection d'un système de messagerie de courriel ou d'un système de messagerie de minimessage à partir de l'affichage d'agrégation d'une pluralité de systèmes de messagerie sur l'élément d'interface (102), une fenêtre pour composer une réponse à un courriel ou un minimessage est implémentée de sorte que la fenêtre soit vierge et prête pour une entrée de texte.

2. Dispositif mobile selon la revendication 1, dans lequel ledit système de messagerie est sélectionné dans le groupe consistant en un minimessage, un courriel, un message multimédia, des clients de clavardage et des clients de réseaux sociaux.

3. Dispositif mobile selon l'une quelconque des revendications précédentes, dans lequel l'actionnement du commutateur de fonctionnement règle simultanément au moins l'une d'une taille de police de texte et d'une luminosité d'affichage mobile.

4. Procédé de commande d'un mode de fonctionnement d'un dispositif mobile, comprenant les étapes de :
fourniture d'une pluralité de systèmes de messagerie ;
fourniture d'un élément d'interface utilisateur (102) comprenant un écran ayant un éclairage d'intensité variable ;
fourniture d'un module de modification de fréquence ayant des modes de fréquence sélectionnables, dans lequel le module de modification de fréquence est configuré pour permettre une sélection entre un signal audio et un signal vibratoire en tant que sortie de dispositif mobile ;
fourniture d'un commutateur de mode de fonctionnement, pour actionner un ensemble prédéfini de modifications pour le mode de fonctionnement du dispositif mobile ;
et fourniture d'un processeur de données couplé auxdits systèmes de messagerie, audit élément d'interface utilisateur, audit module de modification de fréquence et audit commutateur de mode de fonctionnement, **caractérisé en ce que** ledit processeur de données comporte au moins une application logicielle configurée, suite à l'actionnement dudit commutateur de mode de fonctionnement, pour simultanément :
i. régler sélectivement l'intensité d'éclairage dudit élément d'interface utilisateur, de façon à régler l'intensité de rétroéclairage de l'élément d'interface utilisateur (102), à un paramétrage initial prédéfini ;
ii. régler sélectivement le style de police de texte, à un paramétrage initial prédéfini ;
iii. changer sélectivement le mode de fréquence dudit module de modification de fréquence ; et
iv. fournir une sortie personnalisée, dans lequel ladite sortie personnalisée agrège ladite pluralité de systèmes de messagerie et est affichée sur ledit élément d'interface utilisateur ; et
v. dans lequel, lors de la sélection d'un système de messagerie de courriel ou d'un système de messagerie de minimessage à partir de l'affichage d'agrégation d'une pluralité de systèmes de messagerie sur l'élément d'interface (102), une fenêtre pour composer une réponse à un courriel ou un minimessage est implémentée de sorte que la fenêtre soit vierge et prête pour une entrée de texte.

5. Procédé selon la revendication 4, dans lequel ledit système de messagerie est sélectionné dans le groupe consistant en un minimessage, un courriel, un message multimédia, des clients de clavardage et des clients de réseaux sociaux.

6. Procédé selon la revendication 5, dans lequel ledit système de messagerie comporte un courriel et un minimessage, la sélection de l'un dudit courriel et dudit minimessage permet à l'utilisateur de lire ledit courriel ou ledit minimessage et lorsqu'il opte pour répondre à celui-ci, ledit utilisateur se voit présenter une zone vierge prête pour une entrée de texte.
